# EUROPEAN PATENT APPLICATION

(11) **EP 4 742 400 A1**
(43) Date of publication of application: **13.05.2026**
(21) Application number: 25768510.7
(22) Date of filing: 12.02.2025
(51) Int. Cl.: H01M 50/317, H01M 50/271, H01M 50/249

(54) **BATTERY MODULE**

(30) Priority: 06.03.2024 KR 20240032232
(71) Applicant: LG Energy Solution, Ltd., Seoul 07335 (KR)
(72) Inventor: PARK, Won-Kyoung, Daejeon 34122 (KR); CHOI, Hae-Won, Daejeon 34122 (KR); KIM, Young-Gil, Daejeon 34122 (KR)
(74) Representative: Hoffmann Eitle
(86) International application number: PCT/KR2025/002077
(87) International publication number: WO 2025/187986

(57) **Abstract**

A battery module according to an embodiment of the present disclosure includes: a module case including an upper frame having a venting hole formed therein; a plurality of battery cells stored in the module case; a protective cover including an opening/closing member provided at a position corresponding to the venting hole; and a middle cover located between the upper frame and the protective cover and including a venting unit provided between the opening/closing member and the venting hole.

## Description

### TECHNICAL FIELD

This application is based on and claims priority from Korean Patent Application No. 10-2024-0032232, filed on March 06, 2024, with the Korean Intellectual Property Office, the disclosure of which is incorporated herein in its entirety by reference.

The present disclosure relates to a battery module and, more specifically, to a battery module with enhanced safety through structural improvements for the discharge of venting gases or the like.

### BACKGROUND ART

As the demand for portable electronic products such as laptop PCs, video cameras, and mobile phones that use electricity as power increases rapidly, and as mobile robots, drones, electric bicycles, electric carts, and electric vehicles become widely commercialized, active researches on high-performance secondary batteries capable of being repeatedly charged and discharged are underway.

Commercialized secondary batteries include nickel-cadmium batteries, nickel-hydrogen batteries, nickel-zinc batteries, and lithium-ion secondary batteries. Among these, lithium-ion secondary batteries have advantages of flexible charging and discharging due to almost no memory effect, compared to nickel-based secondary batteries, a very low self-discharge rate, a high energy density, and a high operating voltage, so the lithium-ion secondary batteries are being studied more intensively than other types of secondary batteries, and are being applied more widely to actual products.

Recently, secondary batteries have been widely used not only in small devices such as portable electronic devices, but also in medium and large-sized devices such as electric vehicles and energy storage systems (ESSs).

In this case, a battery module in which multiple electrically connected secondary batteries are stored inside a module case is mainly applied, and furthermore, in cases where high power or large capacity is required, a battery pack in which a plurality of battery modules above are electrically connected is also applied. Recently, cell-to-pack-type battery packs in which multiple battery cells are directly stored in a pack housing, instead of being modularized, have been manufactured.

Although secondary batteries with such advantages are being used in various forms, thermal runaway may occur due to swelling, rush current application, and Joule overheating according to the characteristics of secondary batteries.

In addition, an event such as a short circuit between secondary batteries or excessive temperature rise may occur, or venting gas may be generated due to an oxidation and reduction decomposition reaction of the electrolyte, and if it worsens, not only flames but also high-temperature particles including electrode plate fragments, active material fragments, or aluminum particles may be released out in the form of sparks or the like, so it is very important to secure the safety of battery modules or battery packs comprised of multiple battery modules.

Battery modules or battery packs may be more vulnerable to thermal events because multiple secondary batteries (battery cells) or multiple cell assemblies are densely packed in a space thereof. In particular, if thermal runaway occurs inside the battery module, high-temperature gas, flame, and heat are generated, and if these are not quickly controlled, a thermal chain reaction may occur in adjacent battery cells or battery modules due to thermal propagation or the like.

In the case of medium and large battery packs applied to vehicles such as electric vehicles that users ride, a large number of battery cells and battery modules are installed more intensively to increase output and capacity, which may cause not only large-scale fires but also human casualties. Therefore, there is a great need to fundamentally suppress and control thermal events that may occur in the battery modules or the like from the initial stage.

Conventional battery modules are also equipped with basic structures or devices such as venting holes to discharge venting gas or flame to the outside. However, as discussed above, thermal events occurring in the battery cells or battery modules may cause fatal safety issues. Therefore, structural improvements are needed to more accurately and quickly discharge venting gas and effectively suppress the chain propagation of thermal events to adjacent battery cells.

### DISCLOSURE

### Technical Problem

The present disclosure is designed to solve the problems of the related art, and therefore the present disclosure is directed to providing a battery module with enhanced safety by effectively suppressing the chain propagation of thermal events occurring in battery cells through simple structural improvements while inducing rapid discharge of the venting gas to the outside.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a module case including an upper frame having a venting hole formed therein; a plurality of battery cells stored in the module case; a protective cover including an opening/closing member provided at a position corresponding to the venting hole; and a middle cover located between the upper frame and the protective cover and including a venting unit provided between the opening/closing member and the venting hole.

In addition, the opening/closing member of the present disclosure may be configured to open when a thermal event occurs in the battery cell.

In addition, the venting unit of the present disclosure may be configured to physically supports a lower portion of the opening/closing member and comprises a mesh structure that allows gas discharged through the venting hole to pass therethrough.

In addition, the venting unit may include a bone frame having a plurality of mesh holes formed therein.

In addition, the bone frame may have a concave groove formed in a downward direction from an upper surface.

In addition, the concave groove may be formed to extend along a central portion of the bone frame.

In addition, the bone frame may include an inclined structure for directional venting.

In addition, the bone frame may include the inclined structure formed asymmetrically.

In addition, the bone frame may have a V-shaped cross section.

In addition, the bone frame may have a through-hole formed therein.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, it is possible to effectively discharge venting gas or flame generated from a battery module or battery cell, and to suppress the opening/closing member from being opened by venting gas or the like that returns or moves in the opposite direction.

Therefore, according to this aspect of the present disclosure, the thermal event can be effectively blocked from propagating or spreading to adjacent battery cells, thereby further improving the safety and reliability of the battery module.

In addition, according to an embodiment of the present disclosure, the mesh structure through which the venting gas passes may be divided into a contact area and a non-contact area with the opening/closing member of the protective cover. Therefore, not only can the physical support of the opening/closing member be effectively implemented, but the opening operation of the opening/closing member can also be efficiently performed.

In addition, according to an embodiment of the present disclosure, it is possible to guide the venting gas to be discharged in a specific direction through the geometrical characteristics of the mesh structure, thereby further increasing the discharge efficiency of the venting gas, flame, or the like.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIGS. 2 and 3 are exploded perspective views illustrating the internal configuration of the battery module shown in FIG. 1.
FIGS. 4 to 6 are perspective views of a battery module according to another embodiment of the present disclosure.
FIG. 7 is an exploded perspective view illustrating the configuration of an upper frame, a middle cover, and a protective cover, when viewed from the bottom, according to an embodiment of the present disclosure.
FIG. 8 is a drawing illustrating a middle cover according to an embodiment of the present disclosure.
FIGS. 9 and FIG. 10 are drawings schematically illustrating the opening of the opening/closing member in the middle cover according to different embodiments of the present disclosure.
FIG. 11 is a partially enlarged view of a venting unit in a middle cover according to another embodiment of the present disclosure.
FIG. 12 is an enlarged view of part A2 in FIG. 11.
FIG. 13 is a cross-sectional view taken along line A3 - A3' in FIG. 12.
FIG. 14 is an enlarged cross-sectional view schematically illustrating a portion in which one venting unit is provided in a battery module according to another embodiment of the present disclosure.
FIG. 15 is an enlarged cross-sectional view schematically illustrating a portion in which one venting unit is provided in a battery module according to another embodiment of the present disclosure.
FIG. 16 is an enlarged cross-sectional view schematically illustrating a portion in which one venting unit is provided in a battery module according to another embodiment of the present disclosure.
FIG. 17 is a cross-sectional view schematically illustrating the configuration of a portion of a bone frame included in a venting unit according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, in describing the present disclosure, descriptions of related known functions or configurations, which may obscure the subject matter of the present disclosure, will be omitted.

In addition, the present disclosure may include various embodiments. Redundant descriptions of substantially the same or similar configurations will be omitted from respective embodiments.

In this specification, the expression "an element 'includes' another element" should be understood, unless stated otherwise, that the element may further include other elements, instead of excluding other elements.

In addition, the expression "an element is 'connected' or 'coupled' to another element" should be understood that the elements may be "directly connected or coupled" to each other, and that the elements may be "indirectly connected or coupled" to each other with another element interposed therebetween.

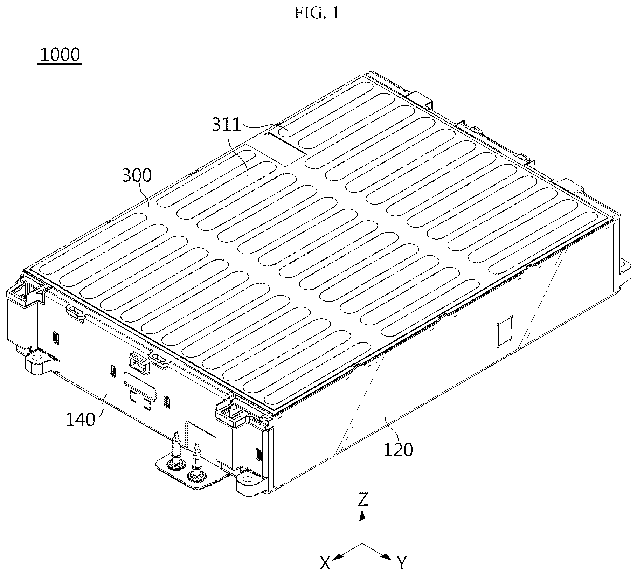

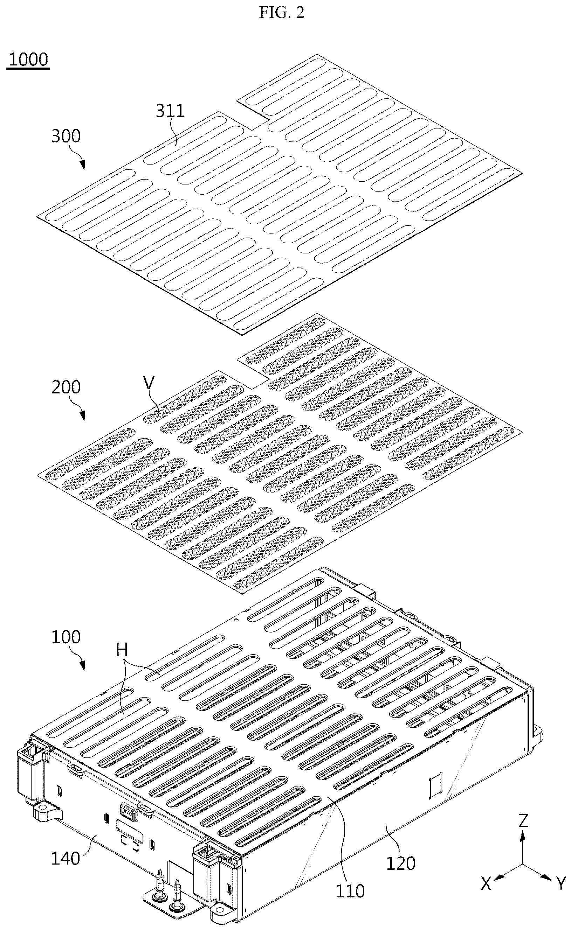

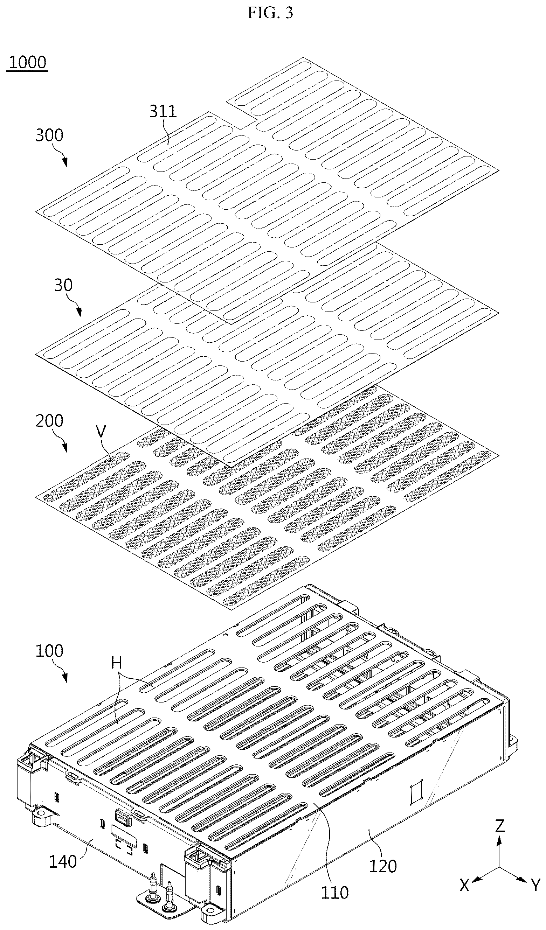

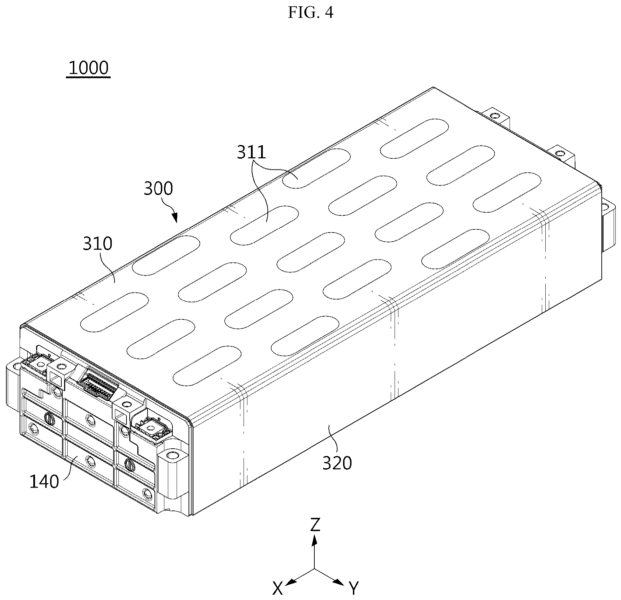

FIG. 1 is a perspective view of a battery module 1000 according to an embodiment of the present disclosure, and FIGS. 2 and 3 are exploded perspective views illustrating the internal configuration of the battery module 1000 shown in FIG. 1. In addition, FIGS. 4 to 6 are perspective views of a battery module according to another embodiment of the present disclosure.

The battery module 1000 according to an embodiment of the present disclosure may include a module case 100, a middle cover 200, a protective cover 300, and a battery cell 400.

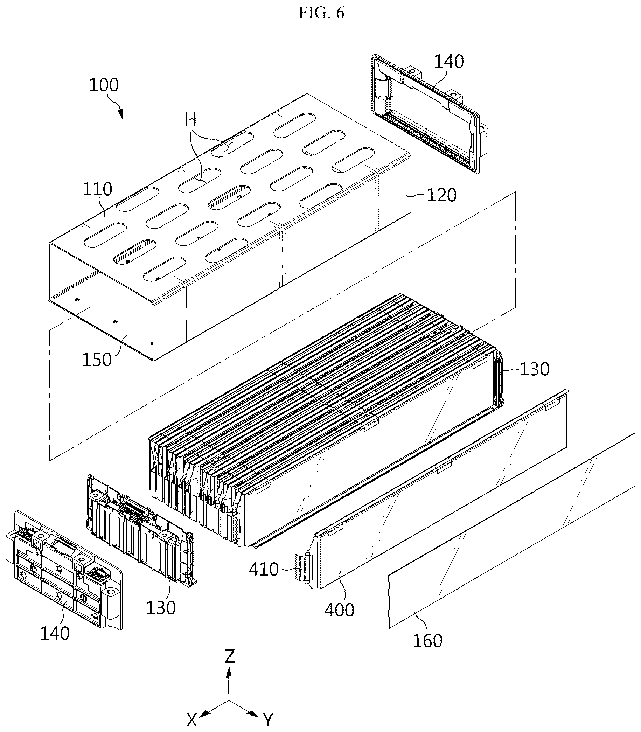

A plurality of battery cells 400 may be included, and as illustrated in FIG. 6, may be disposed in parallel in a front-back direction (X-axis direction) or left-right direction (Y-axis direction) while standing in a vertical direction (Z-axis direction).

The present disclosure is not limited to a specific type or shape of the battery cell 400, and various battery cells 400 known at the time of filing the present disclosure may be employed to configure the battery module 1000 of the present disclosure. Although the present embodiment will be described based on a pouch-type secondary battery with high energy density and easy stacking, as illustrated in the drawing, it is obvious that a cylindrical or prismatic secondary battery may be applied to the battery cell 400.

The plurality of battery cells 400 may include an electrode assembly, a cell case that stores the electrode assembly, and an electrode lead 410 that is connected to the electrode assembly and extends outside the cell case to function as an electrode terminal. In the case where the battery cell 400 is a pouch-type secondary battery, the cell case may be configured in the form of a pouch in which an aluminum metal layer is interposed between polymer layers.

The plurality of battery cells 400 may be electrically connected to each other through one or more combinations of serial connection or parallel connection. The bus-bar assembly 130 illustrated in the drawing is an exemplary configuration therefor, and the bus-bar assembly 130 is configured to be electrically connected to the electrode leads 410 of the plurality of battery cells 400.

As illustrated in FIG. 6, a compression pad 160 may be disposed inside the module case 100. The compression pad 160 may be disposed between at least some of the battery cells 400 and/or on the outer side of a cell stack. For example, the compression pad 160 may be configured to be disposed between every four battery cells 400 stacked in the left-right direction (Y-axis direction).

The compression pad 160 may be configured to be made of an elastic material such as polyurethane or to include such a material so as to absorb swelling of the battery cell 400, and may be configured to be made of an insulating material or a fireproof material such as silicone or mica or to include such a material so as to block heat or flame.

The module case 100 stores the plurality of battery cells 400 and related components. The module case 100 may have an overall cuboid shape, and may include an upper frame 110, a side frame 120, an end frame 140, and a lower frame 150, as illustrated in the drawing.

The respective frames constituting the module case 100 may be coupled or assembled with each other by means of bolting, laser welding, ultrasonic welding, or the like, and depending on the embodiment, adjacent frames may be implemented as an integrated body.

One or more of the upper frame 110, the lower frame 150, and the side frame 120 constituting the module case 100 may have an inner surface made of clad metal, or a flame-retardant material such as GFRP attached to the inner surface.

One or more of the frames 110, 120, 140, and 150 constituting the module case 100 may be made of a metal material such as stainless steel (SUS) with high strength or a material with high heat resistance, temperature resistance, and impact resistance in order to effectively and physically protect components inside the same and, depending on the embodiment, may be made of different materials between parts.

The module case 100 of the present disclosure may be implemented in various structures and forms, including the embodiments illustrated in the drawings, depending on the features or specifications of the battery cell 400, the shape, structure, and size of the battery cell 400, or the number of components stored therein.

As shown in the drawings, the upper frame 110 constituting the module case 100 has a venting hole H for discharging flames, venting gas, particles, debris, or sparks (hereinafter referred to as "gas or the like") generated from the battery cell 400 stored inside the module case 100 to the outside.

The number, shapes, and forms of the venting holes H may be configured in various ways depending on the specifications, capacity, size, and use of the battery cell 400 or battery module 1000.

The protective cover 300 of the present disclosure is configured to cover the top of the middle cover 200, which will be described below, and includes an opening/closing member 311 provided at a position corresponding to a venting hole H provided in the module case 100, specifically, in the upper frame 110 of the module case 100.

The opening/closing member 311 may be configured to be closed in a normal case to prevent external foreign substances such as moisture and dust from entering the battery module 1000 and to be opened by pressure such as gas or the like when a thermal event occurs in the battery module 1000.

The opening/closing member 311 may be implemented such that some or entirety of the edge of the opening/closing member 311 is coupled or connected to a hole, which is formed to have a shape corresponding to the opening/closing member 311 in the protective cover 300. In addition, the opening/closing member 311 may be configured such that the coupled or connected portion is separated or broken when a force (pressure) due to gas or the like is applied, enabling an opening operation.

The opening/closing member 311 may be implemented as a type of door capable of opening and closing. Depending on the embodiment, the opening/closing member 311 may also be implemented in the form of a cut line or a tear line formed on the body of the protective cover 300 and separated, broken, or torn when a pressure exceeding a threshold value is applied.

Through this configuration, when part or entirety of the opening/closing member 311 is opened by the pressure of gas or the like generated in the battery module 1000, the venting hole H of the module case 100 is exposed to the outside, so that the gas or the like generated inside the battery module 1000 may be discharged to the outside through the hole exposed by the opening of the venting hole H and the opening/closing member 311.

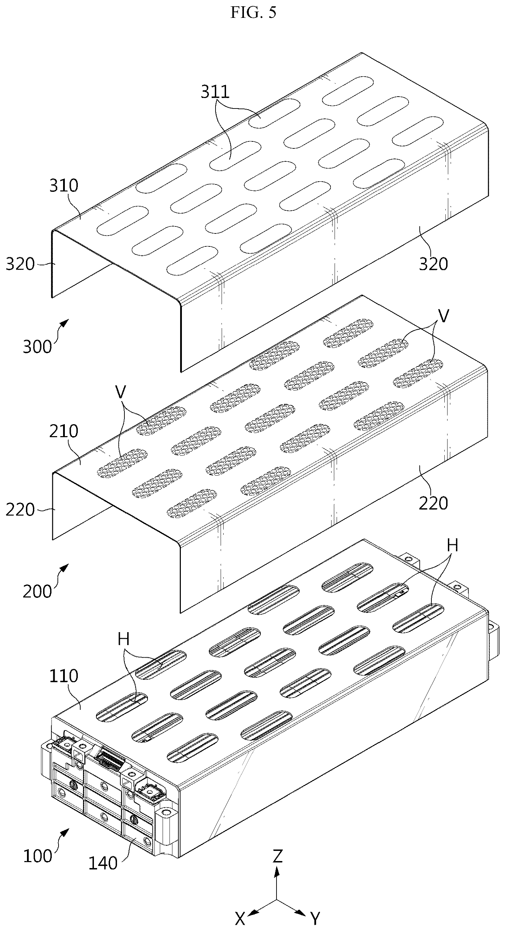

The protective cover 300 may be configured in the form of a plate extending in the horizontal direction (on the XY plane) as illustrated in FIG. 2. In addition, depending on the embodiment, the protective cover 300, in order to improve structural engineering rigidity, physical support, or bonding strength, may include a second top cover 310 covering the top of the module case 100 and a second side cover 320 extending downward from the second top cover 310, as illustrated in FIG. 5. In this case, the protective cover 300 may be configured to surround at least two sides of the module case 100, i.e., the upper surface and the left and right surfaces.

The middle cover 200 of the present disclosure may be positioned between the upper frame 110 of the module case 100 and the protective cover 300, and may include a venting unit V. The venting unit V may be positioned between the opening/closing member 311 and the venting hole H, and may be located at a position corresponding to the opening/closing member 311 and the venting hole H.

Specifically, the venting unit V provided in the middle cover 200 may be configured to face the opening/closing member 311 provided in the protective cover 300 in the upward direction (on the Z-axis) and to face the venting hole H provided in the module case 100, specifically the upper frame 110 of the module case 100, in the downward direction (on the Z-axis).

The module case 100 may include a plurality of venting holes H. For example, a plurality of venting holes H may be provided in the upper frame 110 of the module case 100. In addition, a plurality of opening/closing members 311 may be provided in the protective cover 300 so as to correspond to the plurality of venting holes H. In addition, a plurality of venting units V may be provided in the middle cover 200 so as to correspond to the plurality of venting holes H and opening/closing members 311. In particular, the venting holes H, the venting units V, and the opening/closing members 311 may be provided to correspond one to one to each other.

The venting units V provided in the middle cover 200 may be configured in the form of a mesh having a porous structure, as illustrated in the drawing. In particular, a plurality of venting units V may be included to correspond to the plurality of venting holes H and the plurality of opening/closing members 311, and in this case, the plurality of venting units V may be configured in a mesh form. Here, the mesh form may indicate a structure in which a plurality of holes are formed in a single venting unit V corresponding to a single venting hole H. In the case where the venting unit V is configured in a mesh form described above, not only may gas or the like be smoothly discharged to the outside through the porous structure, but the bottom of the opening/closing member 311 may also be physically supported. Therefore, the opening/closing member 311 may be effectively prevented from being opened by unintended external force, especially the pressure applied from the upper portion to the lower portion.

In addition, in the case where the venting unit V is configured in a mesh structure, a function of screening particles (ejected substances) such as sparks may be performed through physical contact through the porous structure. In addition, in this case, it may be more advantageous in lowering the temperature of flame or gas, or reducing the discharge speed.

The detailed configurations and functions of the middle cover 200 and the venting unit V provided in the middle cover 200 will be described later.

As shown in FIG. 2, the middle cover 200 may be configured in the form of a plate. In addition, as shown in FIG. 5, the middle cover 200 may include a first top cover 210 and a first side cover 220 extending downward from the left and/or right edge of the first top cover 210 in order to increase the bonding strength or support strength with the module case 100, depending on the embodiment.

The middle cover 200 may be made of a material such as a non-combustible material such as fiber-reinforced plastic or glass fiber-reinforced plastic (FRP or GFRP), and/or an insulating material such as silicone.

As illustrated in FIG. 2 and FIG. 3, the middle cover 200 may be attached, fixed, bonded, or fastened to the upper frame 110 of the module case 100, and the protective cover 300 may be attached, fixed, bonded, or fastened to the middle cover 200. In addition, as illustrated in FIG. 3, an adhesive sheet 30 may be interposed between the middle cover 200 and the protective cover 300, or an adhesive may be applied therebetween.

The axes depicted in the drawings, terms indicating the axes, and terms indicating directions such as up, down, front, back, left, right, vertical, and horizontal based on the axes are only intended to provide relative standards illustrating the embodiments of the present disclosure, and are not intended to specify directions or positions as absolute terms, so they may also differ depending on the position of the object, or the position or viewing direction of the observer.

For example, in this specification, the disclosure is described based on the configuration in which a part in which the venting hole H is formed in the module case 100 is indicated as the upper frame 110 and in which the middle cover 200 and the protective cover 300 are mounted on the upper frame 110. However, the venting hole H may also be provided in the left or right side frame 120 through rotation or change in position of the battery module 1000, and in this case, the side frame 120 may correspond to the upper frame 110 described in this specification.

Hereinafter, the embodiments of the present disclosure will be described by defining the Z-axis as the up-down direction or vertical direction as described above, so that the X-axis will be defined as the forward or backward direction and the Y-axis will be defined as the left or right direction according thereto.

Hereinafter, the configurations and functions of the middle cover 200 and the venting unit V provided in the middle cover 200 according to a preferred embodiment of the present disclosure will be described in detail with reference to the attached drawings

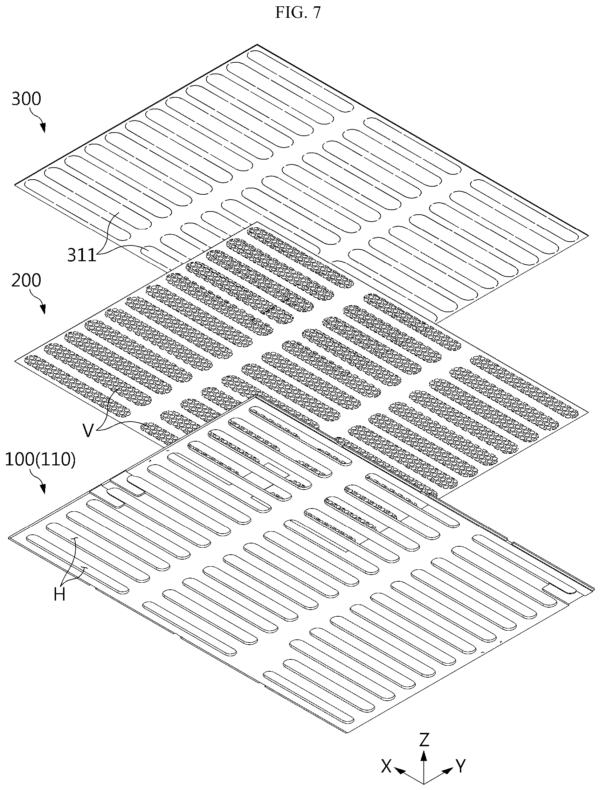

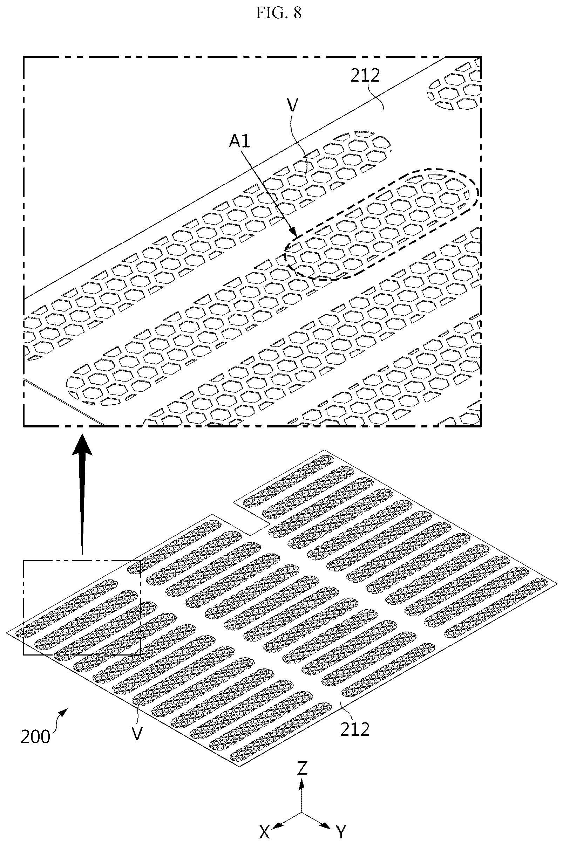

FIG. 7 is an exploded perspective view illustrating the configuration of an upper frame 110, a middle cover 200, and a protective cover 300, when viewed from the bottom, according to an embodiment of the present disclosure. In addition, FIG. 8 is a drawing illustrating a middle cover 200 according to an embodiment of the present disclosure.

As illustrated in the drawings, the middle cover 200 of the present disclosure may be configured to include a body part 212 configured in a plate shape overall and one or more venting units V formed on the body part 212.

As described above, the middle cover 200 of the present disclosure may be disposed between the module case 100, specifically, the upper frame 110 of the module case 100, and the protective cover 300. In addition, the venting unit V of the middle cover 200 may be disposed to match, in position, the venting hole H of the upper frame 110 and the opening/closing member 311 of the protective cover 300.

According to the positional matching arrangement, the venting unit V provided in the middle cover 200 may be configured to face the opening/closing member 311 of the protective cover 300 in the upward direction and face the venting hole H of the upper frame 110 in the downward direction.

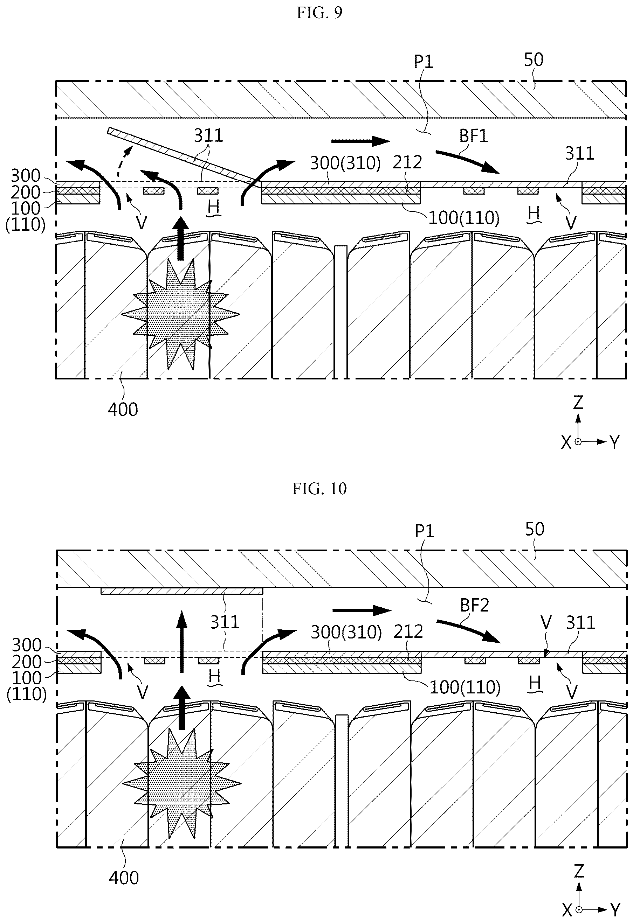

As described above, each of the venting units V of the present disclosure may be configured in the form of a mesh having a porous structure. That is, a plurality of micro-holes (mesh holes) constituting the mesh may be formed in one venting unit V corresponding to one venting hole H. Here, the micro-hole indicate a hole having a smaller size than the venting hole H. In addition, gas or the like generated from the battery cell 400 below (in the -Z-axis direction) may pass through the venting hole H of the upper frame 110 and the venting unit V of the middle cover 200, and the gas or the like passing through them may pressurize the lower part of the opening/closing member 311 upward. Then, the opening/closing member 311 may be opened upward by the pressurization of the gas or the like. The opening of the opening/closing member 311 will be described in more detail with reference to FIGS. 9 and 10.

FIGS. 9 and FIG. 10 are drawings schematically illustrating the opening of the opening/closing member 311 in the middle cover 300 according to different embodiments of the present disclosure. In a normal state, the opening/closing member 311 may remain in a closed state in the protective cover 300 so that the venting hole H and the venting unit V are not exposed to the outside, for example, to the upper side. In particular, the protective cover 300 may be configured so that the opening/closing member 311 stably remains in the closed state. In this case, the opening/closing member 311 may remain in the closed state with a certain level or more of bonding strength or physical support force with respect to the main body of the protective cover 300. However, if gas or the like is generated due to thermal runaway in the battery cell 400 and the pressurized force exceeds a threshold value of the bonding strength or physical support force of the opening/closing member 311, the opening/closing member 311 may be at least partially opened as described above.

In this case, the opening/closing member 311 may be opened such that, for example, the left end is separated from the main body of the upper frame 310, as shown in FIG. 9. In this case, the opening/closing member 311 may be opened in a hinge rotation manner, as indicated by the dotted arrow in FIG. 9. Alternatively, the opening/closing member 311 may be opened such that both ends are ruptured or broken, as shown in FIG. 10. In addition, the opening/closing member 311 may be configured such that the notch in the central portion breaks. The opening configuration of the opening/closing member 311 may be configured in various ways and forms, such as pre-forming a notch, a cut line, or a rupture groove at the boundary between the opening/closing member 311 and the main body of the upper frame 310.

In addition, when the opening/closing member 311 is opened as described above, the inside and the outside of the battery module 1000 may communicate with each other, and through this, the gas or the like generated inside the battery module 1000 may be discharged to the outside of the battery module 1000, as indicated by the arrows in FIGS. 9 and 10.

Meanwhile, the gas or the like discharged through the opening of the opening/closing member 311 may be discharged through a venting path, as indicated by P1, formed inside the battery pack housing, for example, inside the pack lid 50. However, during this discharge process, the venting gas or the like is likely to flow back to another venting hole H. In particular, if high-temperature venting gas or flame flows into the module case 100 through another adjacent venting unit V and venting hole H, a problem may occur in which the thermal event spreads to another normal battery cell 400 or another battery module 1000.

Therefore, in order to more effectively block the thermal event from spreading to another battery cell 400, it is desirable to prevent gas or the like generated and discharged from the outside of the battery module 1000 or another battery cell 400 from flowing thereinto.

As described above, since the opening/closing member 311 is configured to be partially or completely opened by applied pressure or force, if the opening/closing member 311 is pressurized by the pressure of unintended backflow, for example, the gas or the like moving as indicated by the arrows BF1 and BF2 in FIGS. 9 and 10, it may be opened.

However, according to the configuration of the present disclosure, the venting unit V may be configured so that the opening/closing member 311 is not opened by the counterflowing gas or the like. For example, in the implemented configurations in FIGS. 9 and 10, the gas or the like discharged due to opening of the opening/closing member 310 of a specific venting hole H and venting unit V may head to the opening/closing members 310 of other venting holes H and venting units V adjacent thereto, as indicated by the arrows BF1 and BF2. However, even in this case, the opening/closing member 310 may be maintained in a closed state without moving and opening downward due to the lower support structure of the venting unit V. In particular, the venting unit V of the middle cover 200 may be configured as a mesh structure having both holes and bone frames or frameworks between the holes. In addition, the parts forming the bone frames or frameworks of the venting unit V may physically support the bottom of the opening/closing member 311. Therefore, even if an external force, such as a backflow (see the arrows BF1 and BF2), is applied in an unintended direction, it may effectively provide a restraining force that prevents the opening/closing member 311 from being easily opened.

In this regard, the configuration of the present disclosure may implement not only a function of effectively discharging gas or the like to the outside, but also a function of restraining the opening/closing member 311 from being opened by an external force in an unintended direction.

Although a large number of mesh holes are provided in each venting unit V in the embodiment described above, the present disclosure is not limited to a specific number or shapes of mesh holes. For example, one venting unit V may have two or more mesh holes formed therein, and frameworks separating the mesh holes may suppress or limit movement of the opening/closing member 311 in a specific direction.

The middle cover 200 may be configured so that the opening/closing member 311 moves only in a specific direction. For example, in the embodiments in FIGS. 9 and 10, the venting unit V may be configured so that the opening/closing member 311 located on the upper side moves only upward and does not move downward. In this case, the opening/closing member 311 may be opened only by moving upward, and may be restricted from moving downward, thereby preventing opening.

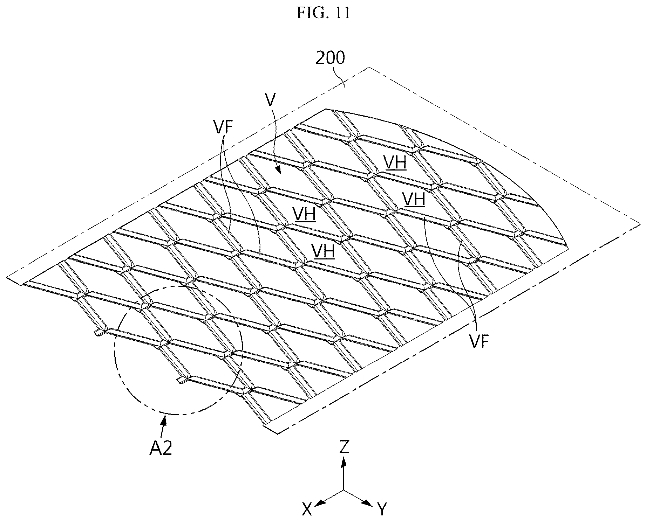

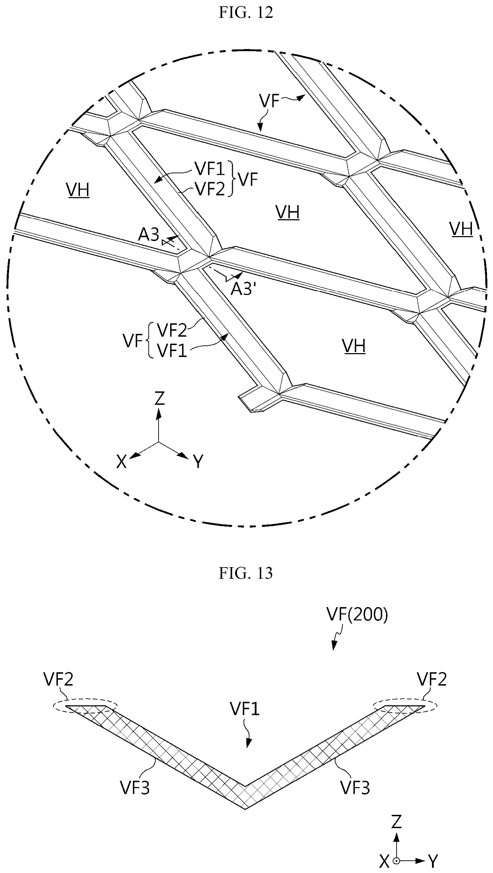

FIG. 11 is a partially enlarged view of a venting unit V in the middle cover 200 according to another embodiment of the present disclosure. For example, FIG. 11 may illustrate part A1 in FIG. 8. FIG. 12 is an enlarged view of part A2 in FIG. 11, and FIG. 13 is a cross-sectional view taken along line A3 - A3' in FIG. 12. In particular, FIG. 13 illustrates cross-sectional portions for convenience of explanation, and other portions may be omitted.

Referring to FIGS. 11 to 13, the venting unit V of the present disclosure may have a bone frame, as indicated by VF. In addition, the bone frames VF may be boundaries that separate a plurality of mesh holes, as indicated by VH, in one venting unit V. The bone frames VF may be configured in various forms capable of dividing an opening forming one venting unit V into a plurality of mesh holes VH. In particular, the bone frame VF may be configured in the form of a bridge that crosses the central portion of the opening formed in the venting unit V.

In the case where such a bone frame VF is provided in the venting unit V, the opening/closing member 311 may be supported. For example, as illustrated in FIGS. 9 and 10, the opening/closing member 311 may be suppressed from moving downward and supported upward by the bone frames VF of the venting unit V. Furthermore, according to this implemented configuration, even if the opening/closing member 311 is formed to have a size similar to that of the venting unit V, the opening/closing member 311 may be prevented from passing through the venting unit V and moving to the inside of the module case 100 to open.

The bone frame VF forming the mesh structure of the venting unit V may be implemented in a three-dimensional structure. In particular, the bone frame may be configured to have a concave groove formed therein, as indicated by VF1 in FIGS. 12 and 13. The concave groove VF1 may be formed to be concave in a downward direction from the upper surface of the bone frame VF.

Furthermore, this concave groove VF1 may be formed to extend along the extension direction of each bone frame VF. For example, the bone frames VF may be configured in the form of a plurality of lines that extend and are interwoven with each other such that a plurality of mesh holes VH are formed in the shape of a substantially rhombus. In this case, the concave groove VF1 may be formed to extend along the extension direction of the bone frame VF, and may have a substantially rhombus shape, similar to the bone frame VF.

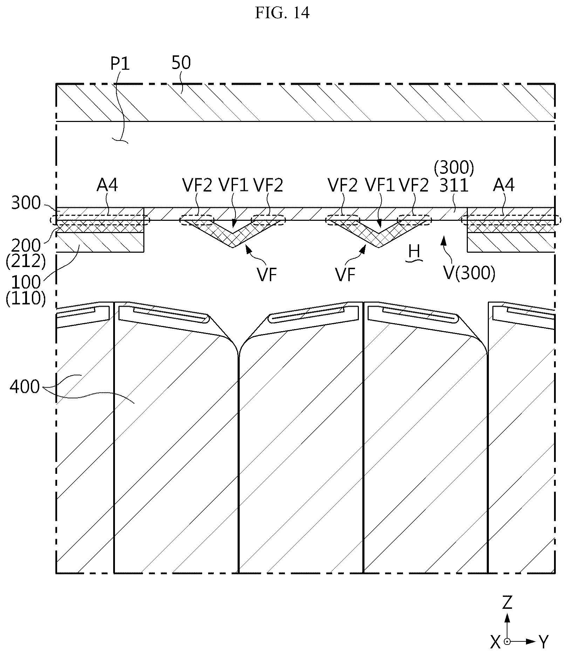

According to this implemented configuration of the present disclosure, stable opening of the opening/closing member 311 may be secured in an emergency situation such as thermal runaway. This will be further described in more detail with reference to FIG. 14.

FIG. 14 is an enlarged cross-sectional view schematically illustrating a portion in which one venting unit V is provided in a battery module 1000 according to another embodiment of the present disclosure.

Referring to FIG. 14, the upper frame 110 of the module case 100, the middle cover 200, and the protective cover 300 may be configured such that they are sequentially stacked in the up-down direction. In this case, an adhesive material such as an adhesive sheet 30 or an adhesive may be interposed between the upper frame 110, the middle cover 200, and/or the protective cover 300, as illustrated in FIG. 3, in order to more stably maintain the stacked or bonded state thereof.

In particular, even when external impact or vibration is applied, or in a high-temperature and high-pressure situation such as thermal runaway, the protective cover 300 needs to be stably coupled to the outer side of the middle cover 200. Furthermore, the opening/closing member 311 of the protective cover 300 needs to be aligned with the venting unit V of the middle cover 200, and if they are even slightly misaligned, the venting unit V may not open in an emergency situation such as thermal runaway, so that gas or the like may not be discharged smoothly. Therefore, an adhesive material may be interposed between the middle cover 200 and the protective cover 300 to secure bonding strength.

In this case, a representative method for providing an adhesive material between the middle cover 200 and the protective cover 300 is applying an adhesive material to the lower surface (inner surface) of the protective cover 300 and then attaching the protective cover 300 to the upper surface of the middle cover 200. In this case, the adhesive material may be interposed in the space between the body part 212 of the middle cover 200 and the protective cover 300, as indicated by A4 in FIG. 14. However, the adhesive material may be provided not only in the space A4, but also between the bone frame VF of the venting unit V and the opening/closing member 311 of the protective cover 300.

In this case, according to the above-implemented configuration of the present disclosure, the contact area between the bone frame VF and the opening/closing member 311 may be reduced. More specifically, in FIG. 14, the portion of the bone frame VF, which is bonded to the opening/closing member 311, may be a protruding structure VF2. That is, as described in the embodiment in FIGS. 12 and 13 above, the bone frame VF may have the concave groove VF1 formed therein, and thus may have a portion that protrudes relatively upward, i.e., a protruding structure, as indicated by VF2. In addition, the protruding structure VF2 of the bone frame VF may be a portion that is in contact with and bonded to the lower surface (inner surface) of the opening/closing member 311.

In the above-implemented configuration, the concave groove VF1 of the bone frame VF may not be bonded to the opening/closing member 311. Therefore, it is possible to prevent the problem that the opening/closing member 311 is not opened due to excessive adhesion to the bone frame VF even in an abnormal situation where the internal pressure of the module case 100 increases. That is, according to the above-implemented configuration, by reducing the adhesion between the middle cover 200 and the protective cover 300, the venting performance may be stably guaranteed in situations such as thermal runaway.

The concave groove VF1 may be formed to extend along the central portion of each bone frame VF. In this case, each bone frame VF may have a protruding structure VF2 provided at both ends of the concave groove VF1. For example, in the case where the bone frame VF is formed in a substantially rhombus shape, the concave groove VF1 and the protruding structure VF2 may be formed to extend along the central portion and both ends of the bone frame VF. In particular, the concave groove VF1 may be formed on the entire outer surface of the bone frame VF facing the opening/closing member 311 of the protective cover 300.

According to this implemented configuration of the present disclosure, the contact and adhesion area between the opening/closing member 311 and the bone frame VF may be further reduced. Therefore, the opening operation of the opening/closing member 311 may be performed smoothly without interference.

The bone frame VF may include an inclined structure such as a portion indicated as VF3 in FIG. 13.

The inclined structure VF3 may be configured to provide directional venting of gas or the like generated from the battery cell 400 and discharged to the outside through the venting hole H and the venting unit V. The inclined structure VF3 may be formed on the lower part of the bone frame VF facing the battery cell 400, that is, on the inner surface.

For example, referring to the embodiment in FIG. 13, each bone frame VF may have an inclined surface formed on the lower portion so as to be inclined at a predetermined angle (e.g., 60 degrees) with respect to the vertical direction (Z-axis direction). In particular, the inclined structure VF3 may be formed on both sides of the lower portion of the bone frame VF.

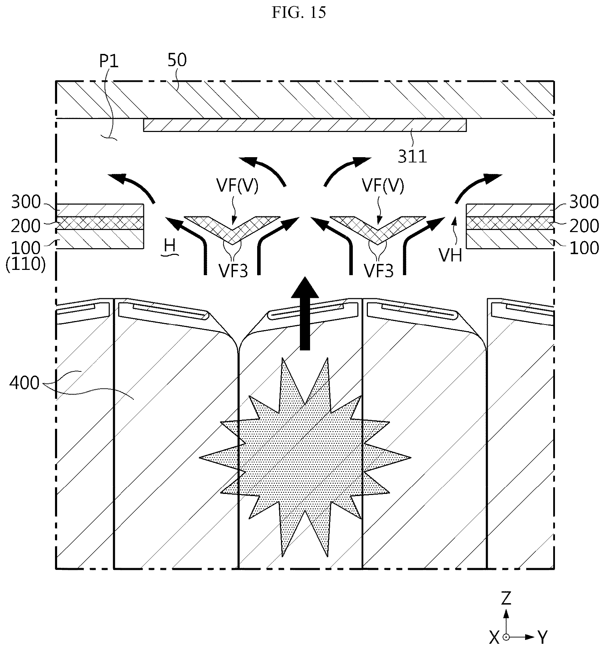

According to the above-implemented configuration of the present disclosure, gas or the like may be discharged more smoothly through the venting hole H and the venting unit V. This will be further described in more detail with reference to FIG. 15.

FIG. 15 is an enlarged cross-sectional view schematically illustrating a portion in which one venting unit V is provided in a battery module 1000 according to another embodiment of the present disclosure.

Referring to FIG. 15, when gas or the like is generated from the battery cell 400, the opening/closing member 311 may be opened, and the generated gas or the like may be discharged to the outside of the battery module 1000 through the venting hole H and the venting unit V. In this case, a venting passage P1 may be formed between the outer side of the battery module 1000, for example, the outer side of the protective cover 300, and the inner side of the pack lid 50.

In particular, the fluid flow direction in the venting passage P1 may have a bent shape in a direction approximately orthogonal to the gas discharge direction from the venting hole H. For example, in the embodiment of FIG. 15, the venting hole H of the module case 100 may be formed on the upper frame 110, and gas or the like may be discharged upward (in the +Z-axis direction) from the battery cell 400. In this case, the gas or the like ejected toward the venting hole H may reach the inclined structure VF3 of the bone frame VF in the venting unit V. In addition, the gas or the like may flow at a predetermined angle (approximately 30 to 70 degrees) along the inclined surface of the inclined structure VF3 from the vertical direction (Z-axis direction) to the horizontal direction. In addition, the gas or the like discharged in an inclined direction by the inclined structure VF3 may flow more smoothly in the horizontal direction, which is the flow direction of the venting passage P1. That is, according to the above-implemented configuration, by making the angle between the discharge direction of the gas from the venting hole H and the discharge direction of the gas in the venting passage P1 gentler, the gas may be discharged more quickly and smoothly.

In particular, the bone frame may be configured to have a "V"-shaped cross-section.

For example, as shown in FIGS. 13 to 15, when the cross-section obtained by cutting the bone frame VF on a plane perpendicular to the X-Y plane, particularly, the cross-section in the direction orthogonal to the extension direction of the bone frame VF, may have a substantially V-shape.

In this cross-sectional configuration, the bone frame VF may have a concave groove VF1 formed in the center and a protruding structure VF2 formed at both ends of the concave groove VF1. In addition, the lower portion of the bone frame VF may be configured such that only the central portion protrudes downward, conforming to the shape of the concave groove VF1. In particular, the shape of the concave groove VF1 may have a substantially "V"-shape. In addition, the outer surface of the concave groove VF1 may be formed approximately parallel to the inner surface of the concave groove VF1, so that the outer surface on the lower portion of the bone frame VF may form an inclined structure VF3.

According to this implemented configuration of the present disclosure, it is easy to implement the configuration in which the concave groove VF1 is formed on the upper surface of the bone frame VF of the venting unit V, and in which the contact area between the bone frame VF and the opening/closing member 311 is minimized through the protruding structure VF2. In addition, according to this implemented configuration, it is easier to implement the configuration in which the inclined structure VF3 is formed on the lower portion of the bone frame VF.

In addition, according to the above-implemented configuration, the bone frame VF may be configured such that the thickness in the horizontal direction, for example, in the Y-axis direction, is reduced, at least in part, as it gets closer to the battery cell 400, for example, toward the downward direction (-Z-axis direction). In particular, the bone frame VF may have a pointed end (lower end) in the direction toward the battery cell 400. According to the above-implemented configuration, the resistance of gas or the like moving toward the venting hole H and the venting unit V and colliding with the lower portion of the bone frame VF may be reduced. Accordingly, the gas or the like passing through the venting unit V may be discharged more quickly and smoothly.

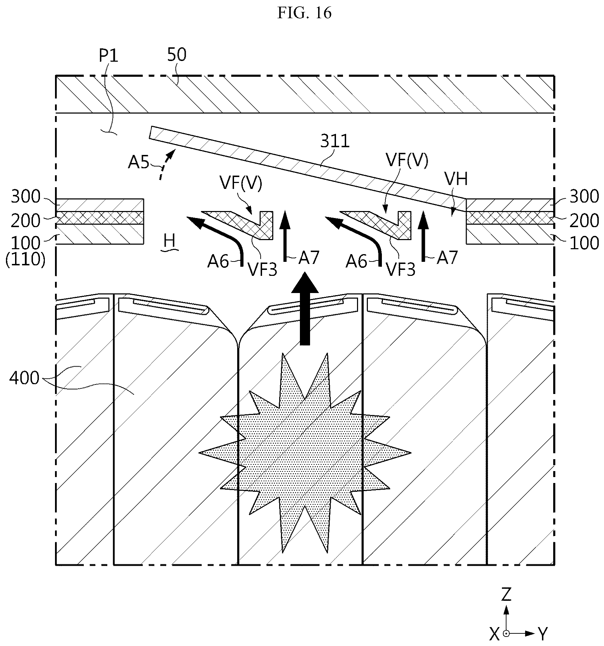

FIG. 16 is an enlarged cross-sectional view schematically illustrating a portion in which one venting unit V is provided in a battery module 1000 according to another embodiment of the present disclosure.

Referring to FIG. 16, the bone frame VF of the venting unit V may have an inclined structure VF3 in an asymmetrical shape. In particular, the cross-section of the bone frame VF may be different between left and right ends, as shown in the drawing. More specifically, the bone frame VF may have an inclined structure VF3 formed only on the left side, and may not have an inclined structure VF3 formed on the right side.

According to this implemented configuration of the present disclosure, in the left side of the bone frame VF, the gas or the like may flow to the left along a direction at a predetermined angle relative to the vertical direction, as indicated by arrow A6, by the inclined structure VF3. On the other hand, since the inclined structure VF3 is not formed in the right side of the bone frame VF, the gas or the like may flow in the vertical direction, as indicated by arrow A7. Therefore, the gas or the like passing through the venting unit V may flow overall in the left direction (-Y-axis direction).

As another example, the bone frame VF may have inclined structures VF3 formed on the left and right sides, respectively, such that the inclined angle of the inclined structure VF3 differs between the left and right sides. For example, the left inclined structure VF3 may have an inclined angle closer to a horizontal plane, compared to the right inclined structure VF3.

The asymmetrical inclination configuration of the bone frame VF may be appropriately designed depending on the opening/closing direction, the opening/closing structure, and the opening/closing form of the opening/closing member 311. For example, as disclosed in the embodiment of FIG. 16, when the opening/closing member 311 rotates clockwise as indicated by the arrow A5 and the left end is opened, it is preferable for gas or the like to be slantly discharged to the left when passing through the venting unit V. In this case, the gas or the like may be discharged more quickly and smoothly due to the opening of the opening/closing member 311.

In particular, the inclined structure VF3 of the bone frame VF may be configured so that the gas or the like is discharged in the direction toward the open end of the opening/closing member 311. For example, as shown in FIG. 16, when the left end of the opening/closing member 311 is opened, the inclined structure VF3 may be formed at the left end of the bone frame VF. Furthermore, the open structure of the opening/closing member 311 may be designed in consideration of the discharge direction in the venting passage P1. Therefore, in the case where the inclined structure VF3 of the bone frame VF is designed by considering the opening direction of the opening/closing member 311, the gas or the like passing through the venting unit V may flow to be discharged more quickly and smoothly through the venting passage P1.

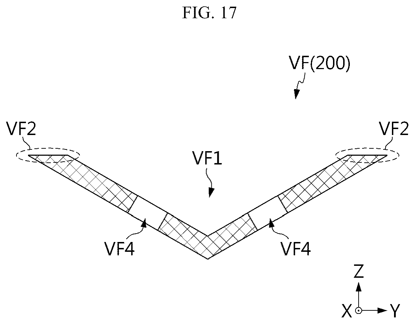

FIG. 17 is a cross-sectional view schematically illustrating the configuration of a portion of a bone frame VF included in a venting unit V according to another embodiment of the present disclosure.

Referring to FIG. 17, a through-hole may be formed in the bone frame VF, as indicated by VF4. This through-hole VF4 may be formed to pass through the bone frame VF in an inward-outward direction. In particular, a concave groove VF1 may be formed in the bone frame VF, and the through-hole VF4 may be formed to expose the concave groove VF1 in an outward direction (for example, in a downward direction) of the bone frame VF.

According to this implemented configuration of the present disclosure, it may be more advantageous to ensure the opening performance of the opening/closing member 311 in an emergency situation by lowering the adhesiveness between the bone frame VF and the opening/closing member 311. In particular, in the case where an adhesive material is applied between the opening/closing member 311 and the bone frame VF, the adhesive material may flow into the concave groove VF1. In this case, the adhesive material flowing into the concave groove VF1 may be discharged to the outside of the concave groove VF1, for example, in the downward direction, through the through-hole VF4. Therefore, in this implemented configuration, by preventing the concave groove VF1 from being filled with an adhesive material, the opening/closing member 311 and the bone frame VF may be prevented from being unintentionally and firmly bonded to each other due to the adhesive material filled in the concave groove VF1.

In addition, according to the above-implemented configuration, when gas or the like is generated from the battery cell 400, the gas or the like may flow into the through-hole VF4 as well as the mesh holes VH between the bone frames VF. In addition, the gas or the like introduced into the concave groove VF1 through the through-hole VF4, as described above, may pressurize the portion of the opening/closing member 311, which is in contact with the bone frame VF, toward the outside. Therefore, the gas or the like may apply a force for opening not only to the portion of the opening/closing member 311 facing the mesh holes VH between the bone frames VF, but also to the portion facing the bone frame VF. Therefore, in this case, when the internal pressure of the battery module 1000 increases, the opening/closing member 311 may be opened more quickly.

Meanwhile, in the above various embodiments, the concave groove VF1 of the bone frame VF may be a non-contact portion that does not come into contact with the lower part of the opening/closing member 311. In addition, the protruding structure VF2 of the bone frame VF may be a contact portion that comes into contact with the lower part of the opening/closing member 311. Here, the contact portion between the protruding structure VF2 of the bone frame VF and the lower part of the opening/closing member 311 may be implemented in the form of direct contact or indirect contact through an adhesive

As described above, in the case where the mesh structure of the venting unit V is divided into a contact portion and a non-contact portion, the contact area with the adhesive sheet 30 or adhesive layer may be reduced. In addition, if the contact area is reduced as described above, the phenomenon in which the opening/closing member 311 is not opened, even though an appropriate force is applied to the opening/closing member 311, due to the opening/closing member 311 being excessively fixed to the venting unit V by the adhesive sheet 30 may be minimized.

According thereto, the above configuration of the present disclosure may also minimize phenomena such as delay in the opening time of the opening/closing member 311 or reduction in the opening area due to the fixing force of the adhesive sheet 30.

In addition, in the case where the venting unit V of the present disclosure has a contact portion and a non-contact portion, even if an unintended external force is applied, the lower part of the opening/closing member 311 may be physically supported through the contact portion, thereby preventing the opening/closing member 311 from being opened in the reverse direction.

One or more of the protective cover 300 and the middle cover 200 of the present disclosure may be made of a material (e.g., mica) having low thermal conductivity, excellent heat resistance, and/or fire resistance or may include the same so as to minimize the influence of the thermal event and effectively block the transfer or propagation of the thermal event. Depending on the embodiment, at least one of the protective cover 300 and the middle cover 200 may be configured as a metal or polymer material having rigidity and heat resistance.

A battery pack according to the present disclosure may include at least one battery module 1000 according to the present disclosure described above. For example, the battery pack according to the present disclosure may be configured to have a pack housing, and to include a plurality of battery modules according to the present disclosure inside the pack housing. In this case, in the case where the battery modules according to the present disclosure are stored, the effect of preventing thermal propagation between the battery modules is excellent in an emergency situation such as thermal runaway, and sufficient time for response or escape of the user may be secured.

In addition, the battery pack according to the present disclosure may further include various components of the battery pack known at the time of filing the present disclosure, such as a BMS, a bus-bar, a relay, and a current sensor, in addition to the battery module.

Meanwhile, components such as a BMS, a bus-bar, a relay, and a current sensor may be included as components of the battery module according to the present disclosure. In this case, the components such as a BMS, a bus-bar, a relay, and a current sensor may be provided inside the module case 100. Here, the battery module may be referred to as a battery pack, and the module case 100 may be referred to as a pack housing. Furthermore, in this case, the battery module according to the present disclosure may be a cell-to-pack-type battery pack in which the battery cells 400 are directly mounted in the pack housing.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

The attached drawings for the explanation of the present disclosure and the illustrations of the embodiments thereof may be illustrated in a somewhat exaggerated form in order to emphasize or highlight the technical concept of the present disclosure, but it should be interpreted that various modifications are possible to those skilled in the art to which the present disclosure pertains, considering the previously descriptions and matters illustrated in the drawings.

In addition, it should be understood that expressions such as first, second, upper, lower, upward, and downward in the description of the present disclosure are merely conceptual terms used to relatively distinguish between respective components (elements), and are not intended to indicate a specific order, priority, or terms used to physically distinguish between the components (elements) on an absolute basis.

**[Description of Reference numerals]**

| | | | | | | | |
|---|---|---|---|---|---|---|---|
| 1000: | battery module | | | | | | |
| 100: | module case | | | | | | |
| 110: | upper frame | 120: | side frame | | | | |
| 130: | bus-bar assembly | 140: | end frame | | | | |
| 150: | lower frame | H: | venting hole | | | | |
| 200: | middle cover | | | | | | |
| 210: | first top cover | 212: | body part | | | | |
| 220: | first side cover | | | | | | |
| V: | venting unit | | | | | | |
| VF: | bone frame | VH: | mesh hole | | | | |
| VF1: | concave groove, | VF2: | protruding structure, | VF3: | inclined structure, | VF4: | through-hole |
| | | 300: | protective cover | | | | |
| | | 310: | second top cover | 320: | second side cover | | |
| | | 311: | opening/closing member | | | | |
| | | 400: | battery cell | 410: | electrode lead | | |

## Claims

1. A battery module comprising:
a module case comprising an upper frame having a venting hole formed therein;
a plurality of battery cells stored in the module case;
a protective cover comprising an opening/closing member provided at a position corresponding to the venting hole; and
a middle cover located between the upper frame and the protective cover and comprising a venting unit provided between the opening/closing member and the venting hole.

2. The battery module according to claim 1,
wherein the opening/closing member is configured to open when a thermal event occurs in the battery cell.

3. The battery module according to claim 1,
wherein the venting unit is configured to physically support a lower portion of the opening/closing member and comprises a mesh structure that allows gas discharged through the venting hole to pass therethrough.

4. The battery module according to claim 1,
wherein the venting unit comprises a bone frame having a plurality of mesh holes formed therein.

5. The battery module according to claim 4,
wherein the bone frame has a concave groove formed in a downward direction from an upper surface.

6. The battery module according to claim 5,
wherein the concave groove is formed to extend along a central portion of the bone frame.

7. The battery module according to claim 4,
wherein the bone frame comprises an inclined structure for directional venting.

8. The battery module according to claim 7,
wherein the bone frame comprises the inclined structure formed asymmetrically.

9. The battery module according to claim 4,
wherein the bone frame has a V-shaped cross section.

10. The battery module according to claim 4,
wherein the bone frame has a through-hole formed therein.

11. A battery pack comprising a battery module according to any one of claims 1 to 10.

12. A vehicle comprising a battery module according to any one of claims 1 to 10.
